# DEMANDE DE BREVET EUROPEEN

(11) **EP 3 054 172 A1**
(43) Date de publication de la demande: **10.08.2016**
(21) Numéro de dépôt: 16152170.3
(22) Date de dépôt: 21.01.2016
(51) Int. Cl.: F16B 11/00, B62D 27/02, B29C 65/48

(54) **INSTALLATION D'ASSEMBLAGE, ENSEMBLE, ET PROCÉDÉ D'ASSEMBLAGE ASSOCIÉS**

(30) Priorité: 09.02.2015 FR 1550996
(71) Demandeur: Faurecia Bloc Avant, 92000 Nanterre (FR)
(72) Inventeur: CHALON, Eric, 25190 VALONNE (FR); IMBERT, Didier, 25460 ETUPES (FR)
(74) Mandataire: Blot, Philippe Robert Emile

(57) **Abrégé**

L'invention concerne une installation d'assemblage d'une première pièce (80) présentant au moins une première surface d'assemblage (84, 86) et d'une deuxième pièce (82) présentant au moins une deuxième surface d'assemblage (88, 90), l'installation comprenant :
- un outil de préhension (52) comprenant un élément de saisie de la deuxième pièce (82), mobile selon au moins une direction de retrait entre une position de prise, une position de retrait, et mobile, lorsque l'outil de préhension (52) est en position de prise, selon au moins une direction d'application (C-C'), entre une position d'éloignement et une position de rapprochement de la première pièce (80), et
- un élément de guidage de l'outil de préhension (52) apte à guider l'outil de préhension (52) selon la direction d'application (C-C') vers la position de rapprochement. La direction d'application (C-C') est différente de la direction de retrait.

## Description

La présente invention concerne une installation d'assemblage d'une première pièce présentant une première surface d'assemblage sur une deuxième pièce présentant une deuxième surface d'assemblage, l'installation comprenant :
- un outil de préhension comprenant un élément de saisie de la deuxième pièce, mobile selon au moins une direction de retrait entre une position de prise, dans laquelle l'élément de saisie (est solidaire de la deuxième pièce, et une position de retrait, dans laquelle l'élément de saisie est retiré de la deuxième pièce, et mobile, lorsque l'outil de préhension est en position de prise, selon au moins une direction d'application, entre une position d'éloignement dans laquelle les surfaces d'assemblage sont espacées l'une de l'autre et une position de rapprochement de la première pièce, dans laquelle les surfaces d'assemblage sont appliquées l'une contre l'autre, et
- un élément de guidage de l'outil de préhension apte à guider l'outil de préhension selon la direction d'application vers la position de rapprochement,

L'invention concerne également un procédé de collage d'une première pièce et d'une deuxième pièce utilisant une telle installation d'assemblage.

Pour la fabrication de nombreux produits, tels qu'en particulier des éléments de véhicules automobiles, il est nécessaire d'assembler entre elle des pièces différentes. Par exemple, les pièces sont réalisées à partir de matériaux différents ou présentent des formes différentes de façon à avoir des fonctions complémentaires.

Il est connu d'assembler certaines de ces pièces par collage.

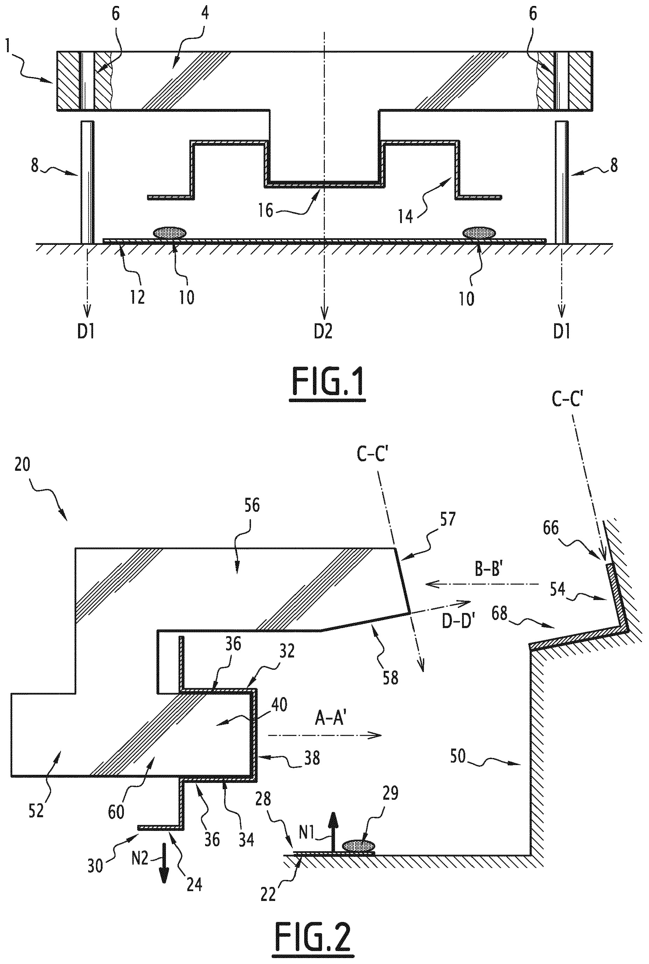

La figure 1 représente une installation d'assemblage 1 selon l'état de la technique. L'outil de préhension 4 comporte des gouttières 6 pour des colonnes de guidage 8. Les colonnes de guidage 8 s'étendent selon la direction d'application D1 qui est perpendiculaire à la première surface d'assemblage 10 de la première pièce 12. Dans cette installation, pour appliquer une deuxième pièce 14 sur la première pièce 12, la deuxième pièce 14 est saisie par l'outil de préhension 4 et rapprochée par l'outil de préhension 4 vers la première pièce 12 selon la direction d'application D1. Les gouttières 6 coulissent sur les colonnes 8. A la fin du collage, l'outil de préhension 4 est retiré selon la même direction D1, dans le sens inverse, et les gouttières 6 coulissent à nouveau sur les colonnes 8.

Cependant, une telle installation impose des géométries particulières pour les pièces 12, 14 à coller. Ainsi, il faut que la deuxième pièce 14 présente une zone de préhension 16 accessible par l'outil de préhension 4 pour la saisie la deuxième pièce 14, selon une direction de préhension D2 perpendiculaire aux surfaces d'assemblage 10, ce qui limite fortement le type de pièces qui peuvent être collées au moyen d'un outil automatisé. Pour des pièces de géométrie plus complexes, un collage manuel doit être effectué, ce qui rend le procédé d'assemblage plus long et coûteux et ce qui peut mener à des défauts d'assemblage d'une pièce à l'autre.

L'un des buts de l'invention est de palier à cet inconvénient en proposant une installation d'assemblage permettant la fixation robuste de façon automatisée de pièces à assembler présentant une grande variété de géométrie.
A cet effet, l'invention concerne une installation d'assemblage du type précité, dans laquelle la direction d'application est différente de la direction de retrait.

Comme la direction de retrait est différente de la direction d'application, il est possible de retirer l'outil de préhension après le collage même pour des pièces dont la direction de préhension n'est pas perpendiculaire à la surface d'assemblage sans que l'élément de guidage de l'outil de préhension ne forme un obstacle au retrait de l'outil de préhension. L'installation permet ainsi de coller des pièces présentant différentes géométries.

L'installation d'assemblage selon l'invention peut comprendre l'une ou plusieurs des caractéristiques suivantes, prise(s) isolément ou suivant toutes les combinaisons techniquement possibles :
- l'outil de préhension est libre en translation par rapport à l'élément de guidage selon la direction de retrait, vers la position de retrait ;
- l'outil de préhension est monté sur un plateau mobile ou une tête de robot aptes à se déplacer au moins selon la direction d'application et selon la direction de retrait ;
- la direction d'application présente un angle avec la normale de la première surface d'assemblage inférieur à 15° ;
- l'élément de guidage comporte une paroi principale s'étendant selon la direction d'application ;
- l'élément de guidage est un coin mécanique comprenant la paroi principale et une paroi secondaire sensiblement parallèle à la direction de retrait ;
- l'élément de guidage est un coin mécanique comprenant la paroi principale, une paroi secondaire, et des cales réglables permettant de déplacer la paroi principale et la paroi secondaire selon la direction de retrait et/ou selon la direction d'application.

L'invention a également pour objet un ensemble comprenant une première pièce et une deuxième pièce, la deuxième pièce étant collée sur la première pièce par une installation d'assemblage tel que précédemment décrite.

L'invention a également pour objet un procédé de collage d'une première pièce et d'une deuxième pièce sur une première pièce comprenant :
- la fourniture d'une première pièce et d'une deuxième pièce comportant des surfaces d'assemblage,
- la fourniture sur au moins une des surfaces d'assemblage d'un cordon de colle,
- la fourniture d'une installation d'assemblage,
- la prise de la deuxième pièce par l'outil de préhension,
- le rapprochement de la deuxième pièce vers la première pièce,
- le guidage de l'outil de préhension selon la direction d'application,
- l'application de la deuxième pièce sur la première pièce,
- le retrait de l'outil de préhension selon la direction de retrait.

Le procédé de collage selon l'invention peut comprendre l'une ou plusieurs des caractéristiques suivantes, prise(s) isolément ou selon toutes les combinaisons techniquement possibles :
- à la fin du rapprochement de la deuxième pièce, l'outil de préhension entre en butée contre la paroi principale ;
- le retrait de l'outil de préhension est effectué avant la fin de prise de la colle.

L'invention sera mieux comprise à la lecture de la description qui va suivre donnée uniquement à titre d'exemple, et faite en se référant aux dessins annexés sur lesquels :
- la figure 1 est une représentation schématique d'une installation d'assemblage de l'état de la technique ;
- la figure 2 est une représentation schématique d'une installation d'assemblage selon l'invention dans une première étape du procédé de collage d'un premier ensemble;
- la figure 3 est une représentation schématique de l'installation d'assemblage de la figure 2 dans une étape suivante du procédé ; et
- la figure 4 est une représentation schématique de l'installation d'assemblage de la figure 2 et de la figure 3 à la fin du procédé ; et
- la figure 5 est une représentation analogue à la figure 3 de l'installation d'assemblage de la figure 2 pour la fabrication d'un deuxième ensemble.

Une installation d'assemblage 20 selon l'invention est représentée sur les figures 2 à 5.

L'installation d'assemblage 20 est destinée à assembler une première pièce 22 à une deuxième pièce 24 pour former un ensemble 26.

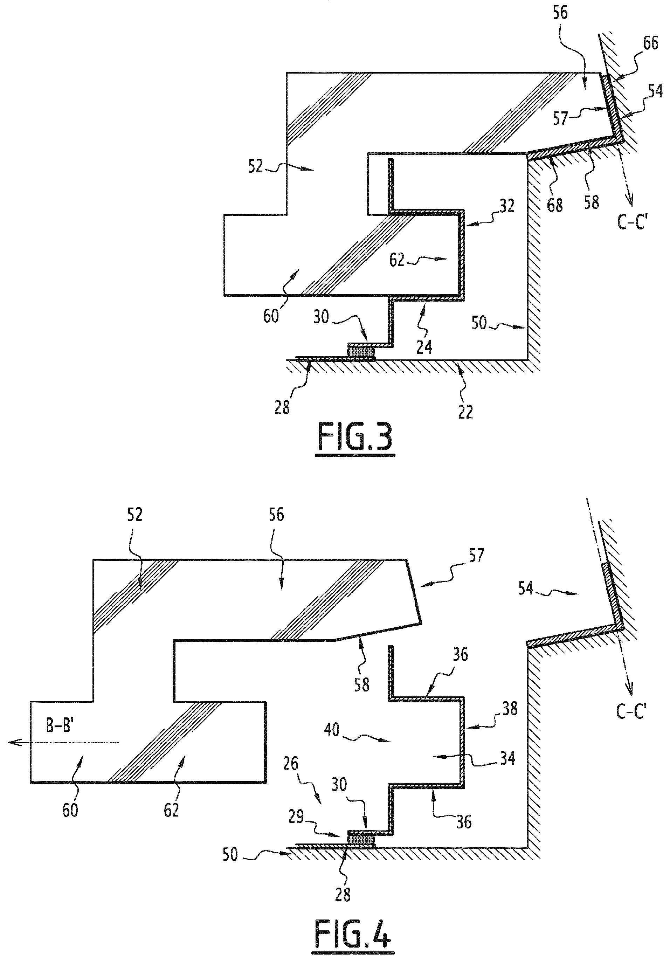

Un premier ensemble 26 formé par la première pièce 22 et la deuxième pièce 24 est représenté sur la figure 4, la deuxième pièce 24 étant collée sur la première pièce 22.

L'ensemble 26 est par exemple un élément de véhicule automobile, comme un élément de becquet arrière de véhicule. L'invention s'applique, en outre, à d'autres domaines que l'industrie automobile, et peut former d'autres types d'ensembles 26 formés à partir de deux pièces collées dans d'autre domaine technique.

La première pièce 22 et la deuxième pièce 24 sont, par exemple, réalisées dans le même matériau, par exemple en polymère ou du métal. En variante, chaque pièce 22, 24 est en matériau différent.

La première pièce 22 présente une première surface d'assemblage 28. La première surface d'assemblage 28 est, par exemple, formée par une zone localisée d'une des faces de la première pièce 22.

La première surface d'assemblage 28 est destinée à recevoir un cordon de colle 29. La première surface d'assemblage 28 est destinée à être collée sur une deuxième surface d'assemblage 30 de la deuxième pièce 24 par application de la deuxième surface d'assemblage 30 contre la première surface d'assemblage 28.

La deuxième pièce 24 présente la deuxième surface d'assemblage 30 et une zone de préhension 32.

La deuxième surface d'assemblage 30 est, par exemple, formée par une zone localisée d'une des faces de la deuxième pièce 24. La deuxième surface d'assemblage 30 est destinée à être collée sur la première surface d'assemblage 28 par application de la deuxième surface d'assemblage 30 contre la première surface d'assemblage 28.

Dans l'exemple, la première surface d'assemblage 28 et la deuxième surface d'assemblage 30 sont sensiblement planes. La normale de la première surface d'assemblage 28 est notée N1. La normale de la deuxième surface d'assemblage 30 est notée N2.

De façon plus générale, les formes des surfaces d'assemblage 28, 30 sont sensiblement complémentaires. Par exemple, si la première surface d'assemblage 28 est convexe, la deuxième surface d'assemblage 30 est concave avec un rayon de courbure adapté à la convexité de la première surface d'assemblage 28.

La zone de préhension 32 est, dans l'exemple, une cavité 34 ouverte s'étendant selon une direction de préhension A-A'. La cavité 34 comporte des bords latéraux 36 et une paroi de fond 38 reliant une extrémité des bords latéraux 36. L'autre extrémité des bords latéraux 36 est séparée par une ouverture 40 opposée à la paroi de fond 36 selon la direction de préhension A-A'. La cavité 34 est avantageusement orientée selon la direction de préhension A-A' différente de la direction de la normale N2 de la deuxième surface d'assemblage 30. Dans l'exemple représenté, la cavité 34 s'étend selon la direction de la normale de la paroi de fond 38, cette direction étant sensiblement perpendiculaire à la direction N2.

De façon générale, l'angle entre la direction de préhension A-A' de la deuxième pièce 24 et la direction de la normale N2 de la deuxième surface d'assemblage 30 est par exemple compris entre 75° et 105°.

L'installation d'assemblage 20 comprend un support 50 pour la première pièce 22, un outil de préhension 52 de la deuxième pièce 24 et un élément de guidage 54 de l'outil de préhension 52.

Avantageusement, l'installation d'assemblage 20 comprend en outre des dispositifs de déplacement de l'outil de préhension 52 au moins par rapport au support 50. Les dispositifs de déplacement sont automatiques et/ou manuel. Par exemple, l'outil de préhension 52 est monté sur une tête de robot apte à se déplacer au moins selon une direction de retrait B-B' et selon une direction d'application C-C'. En variante, l'outil de préhension 52 est monté un plateau mobile apte à se déplacer au moins selon une direction de retrait B-B' et selon une direction d'application C-C'.

Le support 50 pour la première pièce 22 est apte à recevoir la première pièce 22 et à la maintenir de sorte à ce que la première surface d'assemblage 28 soit accessible par l'outil de préhension 52.

L'outil de préhension 52 comprend une extrémité de guidage 56 et un élément de saisie 60 de la deuxième pièce 24.

L'extrémité de guidage 56 présente une forme complémentaire à l'élément de guidage 54.

L'élément de saisie 60 présente par exemple une forme complémentaire à la zone de préhension 32 de la deuxième pièce 24. Dans l'exemple, la zone de préhension 32 est une cavité 34 et l'élément de saisie 60 présente un bras 62 apte à coopérer avec la cavité 34.

L'outil de préhension 52 est mobile selon au moins une direction de retrait B-B', entre une position de prise représentée sur les figures 2 et 3 et une position de retrait représentée sur la figure 4.

La direction de retrait B-B' est colinéaire à la direction de préhension A-A' de la deuxième pièce 24.

Lorsque l'outil de préhension 52 est dans la position de prise, l'élément de saisie 60 est solidaire de la deuxième pièce 24. Dans la position de prise, l'outil de préhension 52 est apte à déplacer la deuxième pièce 24 dans toutes les directions sauf vers la position de retrait. Par exemple, le bras 62 de l'élément de saisie 60 est emmanché par l'ouverture 40 dans la cavité 34. Il est alors en contact avec les bords latéraux 36 de la cavité 34 et la paroi de fond 38 qui le maintiennent dans la zone de préhension 32.

Dans la position de retrait, représentée sur la figure 4, l'élément de saisie 60 est retiré de la deuxième pièce 24. Le bras 62 est hors de la cavité 34. L'outil de préhension 52 et la deuxième pièce 24 sont alors désolidarisés.

L'outil de préhension 52 est, de plus, mobile selon au moins une direction d'application C-C', entre une position d'éloignement représentée sur la figure 2 et une position de rapprochement représentée sur la figure 3.

L'outil de préhension 52 est mobile en translation selon la direction de retrait B-B', entre la position de prise et la position de retrait. De plus, l'outil de préhension 52 est mobile en translation selon la direction d'application C-C' entre la position d'éloignement et la position de rapprochement, lorsque l'outil de translation 52 est dans la position de prise.

Dans la position d'éloignement de la première pièce 22, lorsque la deuxième pièce 24 est saisie par l'élément de saisie 60, la deuxième surface d'assemblage 30 est espacée de la première surface d'assemblage 28.

Dans la position de rapprochement de la première pièce 22, lorsque la deuxième pièce 24 est saisie par l'élément de saisie 60, la deuxième surface d'assemblage 30 est appliquée contre la première surface d'assemblage 28. De la sorte le cordon de colle 29 est pressé entre les deux surfaces d'assemblage 28, 30. La pression et le temps d'application de la deuxième surface d'assemblage 30 sur la première surface d'assemblage 28 peuvent être ajustés en fonction des matières des pièces 22, 24 et de la colle 29 utilisée pour que la deuxième pièce 24 adhère sur la première pièce 22.

La direction d'application C-C' présente un angle avec la normale N1 de la première surface d'assemblage 28 inférieur ou égal à 15°.

La direction d'application C-C' est différente de la direction de retrait B-B'. La direction d'application C-C' forme par exemple un angle compris entre 75° et 105° avec la direction de retrait B-B'.

L'extrémité de guidage 56 comporte une première paroi 57 et une deuxième paroi 58 propre à coopérer avec l'élément de guidage 54.

La première paroi 57 s'étend selon la direction d'application C-C'.

La deuxième paroi 58 s'étend selon une direction d'approche D-D' sensiblement perpendiculaire à la direction d'application C-C'.

L'élément de guidage 54 est fixe par rapport au support 50 de la première pièce 22.

L'élément de guidage 54 de l'outil de préhension 52 est apte à guider l'outil de préhension 52 selon la direction d'application C-C' vers la position de rapprochement représentée sur la figure 3.

En outre l'élément de guidage est avantageusement apte à guider l'outil de préhension 52 selon la direction de retrait B-B' vers la position de retrait représentée sur la figure 4.

L'élément de guidage 54 est un coin mécanique comprenant une paroi principale 66 et une paroi secondaire 68.

La paroi principale 66 s'étend selon la direction d'application C-C'. Cela signifie que la normale de la paroi principale est perpendiculaire à la direction d'application C-C'.

En outre la paroi principale 66 constitue une butée pour l'outil de préhension 52 selon la direction de retrait B-B' lorsque l'outil de préhension 52 arrive dans la position de prise.

La paroi secondaire 68 est, par exemple, perpendiculaire à la paroi principale 66. En variante, la paroi secondaire 68 forme un angle avec la paroi principale 66 compris entre 75° et 105°. Par exemple, la paroi secondaire 68 s'étend selon la direction de retrait B-B'.

La paroi secondaire 68 constitue une butée pour l'outil de préhension 52 selon la direction d'application C-C' lorsque l'outil de préhension 52 arrive dans la position de rapprochement.

Cependant, l'outil de préhension 52 est libre en translation par rapport à l'élément de guidage 54 selon la direction de retrait B-B', vers la position de retrait. Par exemple, le coin mécanique, tel que représenté sur les figures 2 à 4, est ouvert selon la direction de retrait B-B' vers la position de retrait de sorte que l'outil de préhension 52 peut se libérer de l'élément de guidage 54 lorsqu'il se déplace vers la position de retrait.

En outre, l'élément de guidage 54 comporte des cales réglables non représentées permettant de déplacer la paroi principale 66 et la paroi secondaire 68 selon la direction de retrait B-B' et/ou selon la direction d'application C-C' par rapport au support 50 sans changer l'orientation du coin mécanique. Les cales réglables permettent d'ajuster, la pression de collage ou l'épaisseur de colle par exemple.

Un procédé de collage d'une deuxième pièce 24 sur une première pièce 22, à partir de l'installation d'assemblage 20, selon l'invention, va maintenant être décrit.

Une première pièce 22, une deuxième pièce 24 et une installation d'assemblage 20 telle que précédemment décrites sont fournies.

La première pièce 22 est placée sur le support 50. Un cordon de colle est appliqué sur la première surface d'assemblage 28.

Lors d'une étape de saisie de la deuxième pièce 24 par l'outil de préhension 52, l'outil de préhension 52 est déplacé de sorte à saisir la deuxième pièce 24. L'outil de préhension 52 aborde la deuxième pièce 24 selon la direction de préhension A-A' qui est sensiblement la direction de retrait B-B', jusqu'à ce que l'outil de préhension 52 soit dans la position de prise tel que représentée sur la figure 2. L'élément de saisie 60 coopère avec la zone de préhension 32. Le bras 62 passe par l'ouverture 40 et est emboité dans la cavité 34.

La deuxième pièce 24 est ensuite rapprochée vers la première pièce 22 par l'outil de préhension 52 selon la direction d'approche D-D'.

A la fin du rapprochement de la deuxième pièce 24, l'outil de préhension 52 entre en butée contre la paroi principale 66 de l'élément de guidage 54.

L'outil de préhension 52 est ensuite déplacé selon la direction d'application C-C'. L'outil de préhension 52 est guidé par la paroi principale 66' selon la direction d'application C-C'. Par exemple, l'outil de préhension 52 glisse le long de la paroi principale 66.

La deuxième pièce 24 est appliquée sur la première pièce 22. Le cordon de colle est pressé entre les surfaces d'assemblage 28 et 30 en regard.

Après un temps de séchage de la colle, l'outil de préhension 52 est retiré selon la direction de retrait B-B' vers la position de retrait.

Dans une variante, le cordon de colle 29 est appliquée sur la deuxième surface d'assemblage 30.

Dans une variante, un cordon de colle est appliquée sur les deux surfaces d'assemblage 28, 30 à la fois.

Dans une variante, l'installation d'assemblage 20 comporte des dispositifs de verrouillage de la première pièce 22 sur la deuxième pièce 24, tel que des serre-joints. Après l'application de la deuxième pièce 24 sur la première pièce 22, les dispositifs de verrouillage sont placés dans leur état de verrouillage et maintiennent la deuxième pièce 24 appliquée contre la première pièce 22. Le retrait de l'outil de préhension 52 est effectué avant la fin de prise de la colle. Ceci permet de réduire les temps de cycle de fabrication dans les chaines de montage.

En outre, l'installation d'assemblage 20 selon l'invention est également apte à effectuer les assemblages de pièces avec une géométrie semblable aux première pièce 12 et deuxième pièce 14 assemblées par des installations d'assemblage 1 de l'état de la technique comme présenté sur la figure 1. La deuxième pièce 14 présente une direction de préhension A-A' s'étendant selon la direction d'application C-C'. Dans ce cas, la direction de retrait B-B' est parallèle à la direction d'application C-C'.

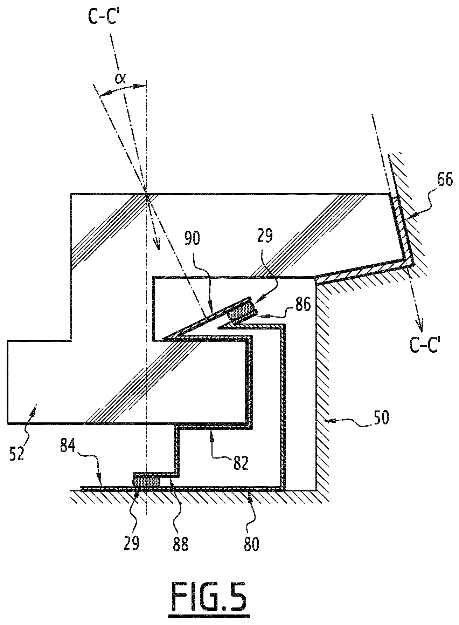

Dans une variante d'utilisation représentée sur la figure 5, l'installation d'assemblage 20 est utilisée pour coller une première pièce 80 et une deuxième pièce 82, les pièces 80, 82 comprenant plusieurs surfaces d'assemblage. La première pièce 22 comporte, par exemple, deux premières surfaces d'assemblage 84, 86 orientées selon des directions différentes et destinée à être collées à deux deuxième surfaces d'assemblage 88, 90 correspondantes de la deuxième pièce 24. Les normales des deux premières surfaces d'assemblage 84, 86 forment entre elles un angle inférieur ou égale à 30° et avantageusement compris entre -15° et +15° de part et d'autre de la direction d'application C-C'. La direction d'application C-C', qui est aussi la direction de la paroi principale 66 du coin est alors avantageusement la direction moyenne des deux normales des premières surfaces d'assemblages 84, 86.

Un seul déplacement de l'outil de préhension 52 vers une position de rapprochement permet d'appliquer simultanément les deux deuxièmes surfaces 88,90 sur les deux premières surfaces 84, 86.

Dans une variante non représentée, le coin mécanique est apte à pivoter de manière à modifier la direction d'application C-C' de l'installation d'assemblage 20. Une même installation d'assemblage 20 est ainsi utilisable pour la fabrication d'ensembles 26 présentant des géométries différentes.

L'installation d'assemblage 20 selon l'invention permet de coller des pièces 12, 14, 22, 24, 80, 82, présentant de multiples géométries. Par exemple, la direction de préhension A-A' de la deuxième pièce 24 peut présenter n'importe quelle orientation par rapport à la normale N2 de la deuxième surface d'assemblage 30, sans gêner le retrait de l'outil de préhension 52.

Cette installation d'assemblage 20 permet la fixation robuste de pièces 12, 14, 22, 24, 80, 82, à assembler présentant une grande variété de géométrie. En outre, le contrôle de la direction d'application C-C' par l'élément de guidage 52 permet d'assurer une bonne étanchéité de l'ensemble 26 final en évitant un écrasement de la colle inhomogène ou les glissements de la colle. Ceci permet d'obtenir des ensembles 26 de meilleures qualités.

En outre, le procédé de collage est automatisable. Ainsi, le procédé est moins long et moins coûteux et les défauts d'assemblage d'un ensemble 26 à l'autre sont limités.

## Revendications

1. Installation d'assemblage (20) d'une première pièce (22, 80) présentant au moins une première surface d'assemblage (28, 84, 86) et d'une deuxième pièce (24, 82) présentant au moins une deuxième surface d'assemblage (30, 88, 90), l'installation (20) comprenant :
- un outil de préhension (52) comprenant un élément de saisie (60) de la deuxième pièce (24, 82), mobile selon au moins une direction de retrait (B-B') entre une position de prise, dans laquelle l'élément de saisie (60) est solidaire de la deuxième pièce (24, 82), et une position de retrait, dans laquelle l'élément de saisie (60) est retiré de la deuxième pièce (24, 82), et mobile, lorsque l'outil de préhension (52) est en position de prise, selon au moins une direction d'application (C-C'), entre une position d'éloignement dans laquelle les surfaces d'assemblage (28, 30, 84, 86, 88, 90) sont espacées l'une de l'autre et une position de rapprochement de la première pièce (22, 80), dans laquelle les surfaces d'assemblage (28, 30, 84, 86, 88, 90) sont appliquées l'une contre l'autre, et
- un élément de guidage (54) de l'outil de préhension (52) apte à guider l'outil de préhension (52) selon la direction d'application (C-C') vers la position de rapprochement, **caractérisée en ce que** la direction d'application (C-C') est différente de la direction de retrait (B-B').

2. Installation d'assemblage (20) selon la revendication 1, dans laquelle l'outil de préhension (52) est libre en translation par rapport à l'élément de guidage (54) selon la direction de retrait (B-B'), vers la position de retrait.

3. Installation d'assemblage (20) selon l'une des revendications 1 ou 2, dans laquelle l'outil de préhension (52) est monté sur un plateau mobile ou une tête de robot aptes à se déplacer au moins selon la direction d'application (C-C') et selon la direction de retrait (B-B').

4. Installation d'assemblage (20) selon l'une quelconque des revendications précédentes, dans laquelle la direction d'application (C-C') présente un angle avec la normale de la première surface d'assemblage (28, 84, 86) inférieur à 15°.

5. Installation d'assemblage (20) selon l'une quelconque des revendications précédentes, dans laquelle l'élément de guidage (54) comporte une paroi principale (66) s'étendant selon la direction d'application (C-C').

6. Installation d'assemblage (20) selon la revendication 5, dans laquelle l'élément de guidage (54) est un coin mécanique comprenant la paroi principale (66) et une paroi secondaire (68) sensiblement parallèle à la direction de retrait (B-B').

7. Installation d'assemblage (20) selon l'une quelconque des revendications 5 et 6, dans laquelle l'élément de guidage (54) est un coin mécanique comprenant la paroi principale (66), une paroi secondaire (68), et des cales réglables permettant de déplacer la paroi principale (66) et la paroi secondaire (68) selon la direction de retrait (B-B') et/ou selon la direction d'application (C-C').

8. Procédé de collage d'une première pièce (22, 80), et d'une deuxième pièce (24, 82), comprenant :
- la fourniture d'une première pièce (22, 80) et d'une deuxième pièce (24, 82) comportant des surfaces d'assemblage (28, 30, 84, 86, 88, 90),
- la fourniture sur au moins une des surfaces d'assemblage (28, 30, 84, 86, 88, 90) d'un cordon de colle (29),
- la fourniture d'une installation d'assemblage (20) selon l'une quelconque des revendications 1 à 7,
- la prise de la deuxième pièce (24, 82) par l'outil de préhension (52),
- le rapprochement de la deuxième pièce (24, 82) vers la première pièce (22, 80),
- le guidage de l'outil de préhension (52) selon la direction d'application (C-C'),
- l'application de la deuxième pièce (24, 82) sur la première pièce (22, 80),
- le retrait de l'outil de préhension (52) selon la direction de retrait (B-B').

9. Procédé selon la revendication 8 utilisant une installation d'assemblage (20) selon la revendication 5, dans lequel à la fin du rapprochement de la deuxième pièce (24, 82), l'outil de préhension (52) entre en butée contre la paroi principale (66).

10. Procédé selon l'une des revendications 8 ou 9, dans lequel le retrait de l'outil de préhension (52) est effectué avant la fin de prise de la colle.
